Europäisches Patentamt

(19) European Patent Office

Office européen des brevets

(11) Publication number: **0 274 189**
**B1**

(12) EUROPEAN PATENT SPECIFICATION

(45) Date of publication of the patent specification:
27.12.90

(51) Int. Cl.⁵: **C08F 2/48**

(21) Application number: 87309548.3

(22) Date of filing: 29.10.87

(54) Riboflavin/fluorescent light-initiated polymerization of water-soluble monomers.

(30) Priority: 07.11.86 US 928228

(43) Date of publication of application:
13.07.88 Bulletin 88/28

(45) Publication of the grant of the patent:
27.12.90 Bulletin 90/52

(84) Designated Contracting States:
DE FR GB IT

(56) References cited:
EP-A- 0 049 647
US-A- 2 850 445

(73) Proprietor: CALGON CORPORATION,
Route 60-Campbell's Run Road, Robinson Township
Pennsylvania 15205(US)

(72) Inventor: Hunter, Wood E., 637 Beverly Road, Pittsburgh,
PA 15242(US)
Inventor: Chan, Marie Siu-Yue, Route No. 3, Box 272-BB,
Forest City, NC 28043(US)
Inventor: Bush, Lee W., 14385 Stablestone Court,
Chesterfield, MO 63017(US)

(74) Representative: Hesketh, Alan, Dr., European Patent
Department Merck & Co., Inc. Terlings Park Eastwick
Road, Harlow Essex, CM20 2QR(GB)

## Description

BACKGROUND OF THE DISCLOSURE

This invention relates to a process for the preparation of water-soluble polymers.

More particularly, this invention relates to a riboflavin/fluorscent light activated continuous polymerization process for the preparation of water-soluble polymers.

Many processes are known in the art for the preparation of water-soluble polymers. For example, water-soluble polymers have been prepared in solution, in suspension and in emulsion using chemical initiators. These processes, however, generally result in low polymer concentration, are labor intensive and therefore costly and involve complicated polymerization procedures which result in non-uniform product quality.

In addition, various other polymerization processes are known. These include processes such as those disclosed in U.S. Patent Nos. 2 850 445, 2 880 152 and 2 880 153 and high energy irradiation process similar to the one disclosed in U.S. Patent No. 3,926,756. Unfortunately, these processes also suffer from a variety of disadvantages, including high capital costs, high energy requirements and low polymer molecular weights. High energy initiated systems (e.g., an ultraviolet/aromatic ketone initiated system) result in highly crosslinked polymers which are insoluble or only partly soluble in water. Using a low energy initiated system (e.g., visible light/photoreducible dye initiated system) generally reduces crosslinking and molecular weight, but increases water solubility. Thus, while it is well known in the art to prepare polymeric materials by photopolymerization using light, the production of high molecular weight, water-soluble polymers by such processes is not known. It is therefore a novel and unexpected accomplishment to produce polymers which are water-soluble, which have high molecular weights, which leave no insoluble residue when dissolved, and which dissolve rapidly.

The present process, which allows the use of fluorescent lights, accomplishes these objectives while providing several other advantages. Fluorescent lamps are highly efficient in producing light, resulting in low lighting costs. Fluorescent lamps typically produce around 72 lumens per watt, compared with a 100-watt incandescent light, which produces around 17.5 lumens per watt.

Fluorescent lamps have a longer life, which reduces maintenance. Average rated lives are up to 20,000 hours -- about five years in normal service. A 100-watt incandescent lamp, on the other hand, lasts around 750 hours, on the average.

Fluorescent lamps have a relatively low brightness and low heat content, compared with incandescent lamps and other light sources with smaller surface areas. The cooler light eliminates the need for cooling during the processing.

The present process has the further advantage that it does not require a reducing agent or the presence of copper ions. Copper ions are often necessary in prior art processes to increase the conversion percentage; however, they simultaneously reduce viscosity. A chelant is sometimes added with the copper ions to mask the copper ion viscosity effect.

The present process allows higher film thickness and, thus, more throughput. It also has the advantage of producing a high viscosity (high molecular weight) product with good conversion.

Accordingly, it is an object of this invention to provide a process for the preparation of high molecular weight, water-soluble polymers that permits the use of high monomer concentrations.

It is a further object of this invention to provide a process for the preparation of water-soluble polymers that eliminates the need for nitrogen purging to remove oxygen from the system.

It is an additional object of this invention to provide a process for the preparation of water-soluble polymers which permits good control over the reaction exotherm.

It is still a further object of this invention to provide a process for the preparation of water-soluble polymers that reduces capital requirements and operating costs.

To obtain both water-soluble and high molecular weight polymers, without sacrificing one benefit for the other, is a novel accomplishment.

DETAILED DESCRIPTION OF THE INVENTION

The above listed and other objects of this invention are accomplished by a process in which a riboflavin/fluorescent light activated continuous polymerization system is used. The present invention is directed to a continuous polymerization process for preparing high molecular weight, water soluble polymers of ethylenically unsaturated water-soluble monomers which comprises:

a. casting upon a continuous belt apparatus to form a film having a thickness of 1/8 inch to 1 inch (0.317 cm to 2.54 cm), an aqueous monomer solution having a monomer concentration of 25 percent to 75 percent, by weight, said monomer solution also containing riboflavin in a concentration of $1\times10^{-7}$ to $1\times10^{-4}$ moles/liter;

b. passing the solution under a series of fluorescent lights which emit visible light at an intensity of from about 1/10 to less than 1000 foot candles (about 1.08 to less than 10764 lux) and controlling the temperature of the monomer solution in the range of 5°C to 55°C; and

c. allowing polymerization to occur in an atmosphere of air or an inert gaseous substance to form a thick water soluble polymer gel.

The process of the present invention may be used to polymerize one or more ethylenically unsaturated monomers, such as acrylamide, acrylic acid, quaternary ammonium compounds or the corresponding free amine, such as methacryloyloxyethyl trimethyl ammonium chloride, methacryloyloxyethyl trimethyl ammonium methylsulfate, methacrylamido-3-propyl trimethyl ammonium chloride, 3-acrylamido-3-methyl butyl trimethyl ammonium chloride, 3-acrylamido-3-methyl propyl trimethyl ammonium chloride, diallyl-dimethylammonium chloride, or 2-acrylamido-2-methyl propane sulfonic acid. The process may be used to prepare the free acid or the water-soluble salts of any of the aforementioned monomers. Aqueous monomer solutions are prepared and the monomer solution fed to the polymerization apparatus at a concentration in the range of from 25 to 75 percent, preferably 40 to 60 percent, by weight. Polymers having molecular weights of at least 50,000, and preferably at least 1,000,000, as measured by viscometry, may be prepared by the process of this invention. These polymers may be dried and dissolved in water for use by a variety of conventional techniques.

The word "riboflavin" includes riboflavin, homologues of riboflavin, and any derivative thereof, for example, riboflavin-5′-phosphate, riboflavin-5′-sulfate and their salts.

The polymerization process of this invention is initiated by fluorescent light. Fluorescent light may be defined as a low heat light generated by electric discharge on phosphor. Fluorescent light produces 50 to 80 lumens per watt, whereas incandescent light products 17 to 23 lumens per watt. Also, particular fluorescent lights generate narrow bands of wavelengths which are more specific than the scattergun wavelengths of incandescent light. Also, unlike incandescent lights, fluorescent lights do not generate ultraviolet or infrared light.

Preferably, any commonly available white fluorescent light may be used. More preferably, a cool white fluorescent light should be used which emits energy over a continuous spectrum of visible wavelengths.

The most common readily available commercial fluorescent lights are white lights. There are several different names for these lights, including cool white, warm white, daylight, etc. These are broad spectrum lamps emitting light over the entire visible range. There are also available less common specialty fluorescent lamps which emit narrow wavelength bands of light. The lamps may be summarized as follows:

| Color | Wavelength Emission (Angstroms) |
|---|---|
| White | 4000–7000 |
| Blue | 4000–5500 |
| Green | 4500–6000 |
| Gold | 5500–6500 |
| Pink/Red | 6000–7000 |

The polymerization process of the present invention is continuous and is preferably carried out on a continuous belt which is driven by two spaced-apart rotating drums. The belt may be stainless steel or plastic and is preferably release coated with a suitable agent. Fluorescent lights are positioned over the belt in such a manner as to provide the desired light intensity to the monomer/initiator mixture which is fed, at the desired thickness, onto the surface of the belt. Cooling or heating water may be sprayed against the underside of the belt to control the reaction temperature and the belt speed may be varied to control the reaction time.

The polymerization process of the present invention does not require a nitrogen purge. It may be carried out in an oxygen-containing enviroment, such as air, or in an inert gas, such as nitrogen or argon, if desired.

The key to this invention is that it is a low energy process which produces high molecular weight, water-soluble polymers at high yields. These benefits cannot be obtained simultaneously by methods known in the art.

Suitable light intensities include those in the range of 1/10 to less than 1000 foot candles (1.08 to less than 10764 lux). Initiation temperatures should be in the range of 5°C to 55°C, preferably 5°C to 45°C, most preferably 10°C to 25°C, and film thickness should be in the range of 1/8 inch to 1 inch (0.317 cm to 2.54 cm), preferably 3/8 inch to 5/8 inch (0.95 cm to 1.59 cm), while reaction time should be in the range of 5 minutes to 120 minutes, preferably 40 minutes to 70 minutes, and pH should generally be in the range of 3.0 to 10.0, preferably 6.0 to 9.0.

The polymers produced in accordance with the process of the present invention may be recovered by conventional means. They may be dried, partially or completely, to produce a gel or particulate product.

It should be understood by those skilled in the art that these parameters will vary somewhat depending on the particular polymers being produced in accordance with the teachings of the present invention.

## EXAMPLES

The following examples will more fully illustrate the practice of this invention. It will be readily understood that these examples should not be construed as limiting the scope of this invention in any way. They merely illustrate some of the variations possible through the practice of this invention.

### Examples 1 through 9

A polymerization apparatus which comprises a continuous belt was adapted for photopolymerization by encasing the belt in a plywood box (12 feet (3.66 m) long). Cool white fluorescent or incandescent lights, as indicated in Table I, were installed at a distance from the belt which resulted in a light intensity of less than 1000 foot candles (10764 lux) for the fluorescent system.

Acrylamide (73.63 pounds (33.4 kg)) and deionized water (73.81 pounds (33.48 kg)) were charged to a 50gallon (226.8 1) mix tank and agitated until uniform. A chelant and/or copper ion were added in some of the examples. Initiator was added and mixed until dissolved. This solution was kept in the dark and purged with air to prevent polymerization.

The monomer mix was fed to the moving belt in a fashion to give a film having a thickness as indicated in Table I, while the lights were turned on. As the monomer mix travelled the length of the belt, initiation was observed by an increase in temperature and color disappearance. Polymer formation was noted by the formation of thick gel sheet. Temperatures increased from 10°C to the maximum indicated in Table I. The polymer sheet which exited the belt was ground and dried in a vacuum oven. The capillary viscosity was measured at .05 g/100 ml 1 $\underline{N}$ NaCl. The results are summarized in Table I.

TABLE I

| Example | Initiator | Amount (g) | Copper (ppm) | Chelant[1] (ppm) | Lights | Conversion (Percent) | Viscosity n.05 (dl/g) | Thickness Inches (cm) | Temperature (°C) | Intensity foot candles (lux) | | Approximate Molecular Weight |
|---|---|---|---|---|---|---|---|---|---|---|---|---|
| 1 | Riboflavin | 0.27 | *13 | 260 | Fluorescent | 92.7 | 22.7 | 3/8 (0.95) | 43 | 500 | (5382) | $8.5 \times 10^6$ |
| 2 | Riboflavin | 0.27 | 13 | 260 | Fluorescent | 95.3 | 22.7 | 5/8 (1.59) | -- | 500 | (5382) | $8.5 \times 10^6$ |
| 3 | Methylene blue/ triethanolamine | 0.28/ 54.8 | < 0.1 | 0 | Incandescent | 95.0 | 17.4 | 3/8 (0.95) | 75 | 4000 | (43056) | $6.6 \times 10^6$ |
| 4 | Methylene blue/ triethanolamine | 0.28/ 54.8 | <0.1 | 0 | Incandescent | 96.0 | 16.3 | 3/8 (0.95) | -- | 4000 | (43056) | $6.3 \times 10^6$ |
| 5 | Methylene blue/ triethanolamine | 0.28/ 54.8 | <0.1 | 0 | Incandescent | 97.3 | 10.8 | 1/2 (1.27) | -- | 4000 | (43056) | $3.7 \times 10^6$ |
| 6 | Methylene blue/ triethanolamine | 0.28 54.8 | 0.1 | 0 | Incandescent | 96 | 16.3 | 3/8 (0.95) | -- | 4000 | (43056) | $6.3 \times 10^6$ |
| 7 | Methylene blue/ triethanolamine | 0.28/ 54.8 | 0.6 | 0 | Incandescent | 97 | 14.2 | 3/8 (0.95) | -- | 4000 | (43056) | $5.6 \times 10^6$ |
| 8 | Methylene blue/ triethanolamine | 0.28/ 54.8 | 0.6 | 12 | Incandescent | 97 | 14.1 | 3/8 (0.95) | -- | 4000 | (43056) | $5.6 \times 10^6$ |
| 9 | Methylene blue/ triethanolamine | 0.28/ 54.8 | 13.0 | 260 | Incandescent | 98 | 10.3 | 3/8 (0.95) | -- | 4000 | (43056) | $3.6 \times 10^6$ |

Comparison Examples: 3–9

[1] Versenex 80

* Acrylamide as received – no need to remove copper by ion exchange.

EP 0 274 189 B1

Table I shows that the riboflavin/fluorescent initiated systems produced higher molecular weights (as determined by intrinsic viscosity) than the incandescent systems. Thus, in Examples 1 and 2, the polymers produced had an intrinsic viscosity of 22.7, and % conversion values were high. Examples 1 and 2 also show that a polymer of excellent quality can be produced using a commercially available acrylamide containing copper. There is no need to remove copper by ion-exchange, which is a costly processing step. Example 2 shows that a film thickness of 5/8″ (1.59 cm) is satisfactory; this film thickness increased production output compared to Examples 3–7. The best polymer achieved with incandescent lights required low gel thickness (3/8″ (0.95 cm)), less than 0.1 ppm copper ion, and still had a lower molecular weight than the fluorescent light/riboflavin polymers.

Comparison Examples 3 through 9 produced polyacrylamide using methylene blue/triethanolamine and incandescent light. The resulting polymers had much lower intrinsic viscosities than those produced by the process of the instant invention, and were, therefore, of lower molecular weight.

Example 10

Acrylamide was polymerized as in Examples 1–9 using cool white fluorescent lights, 0.28 g of the dye indicated, 54.8 g of TEA (triethanolamine) or EDTA (ethylenediaminetetraacetic acid), and no copper or chelant. The following dyes were tested:

Methylene Blue/TEA
Thionine/EDTA
Eosine Y/EDTA
Methyl Orange/EDTA
Methyl Violet/EDTA
Erythrosin B/EDTA

The light intensity was 500 foot candles (5382 lux). The acrylamide monomer would not polymerize using cool white fluorescent lamps with any of the above initiators, except the thionene/EDTA, which caused about 50 percent conversion. Methylene Blue/TEA was also tested using pink fluorescent light. The acrylamide monomer would not polymerize.

Example 10 compares the degree of polymerization of acrylamide using various initators and fluorescent light. The monomer did not polymerize using methylene blue/triethanolamine, eosine Y/EDTA (ethylenediamine-tetraacetic acid), methyl orange/EDTA, methyl violet/EDTA, and erythrosin B/EDTA. There was only 50 percent conversion using thionine/EDTA. By comparison, greater than 90% conversion was obtained using riboflavin (Examples 1 and 2). Thus, riboflavin is the only initiator found to polymerize acrylamide monomer with a high degree of conversion.

In summary, riboflavin initates polymerization using white, blue, green or gold fluorescent lamps. if the wavelengths are solely above 6000 Angstroms, i.e. pink/red, polymerization will not occur. The Examples were run using cool white fluorescent lamps. The riboflavin was also tested with blue fluorescent lamps with the same results.

Methylene blue and cool white or pink lamps would not polymerize the monomer. This is unexpected in that a pink lamp is in the orange-red region and is, theoretically, the best light for methylene blue.

Example 11

The polyacrylamide gel of Example 1 was ground in a meat grinder with a 3/16″ (0.48 cm) die plate. Gel exiting the grinder was treated with 50% sodium hydroxide to give a desired degree of hydrolysis. A 10% molar excess of NaOH, based on the theoretical amount required to give the desired percent hydrolysis, was used. These conversions were run at 50–55°C.

| Resulting Polymer | % Hydrolysis | Reduced* Viscosity (n(.025)) |
|---|---|---|
| Polyacrylamide | 0 | 20.8 |
| Hydrolyzed Polyacrylamide | 6 | 22.2 |
| Hydrolyzed Polyacrylamide | 18 | (26.2) |
| Hydrolyzed Polyacrylamide | 27 | (25.9) |

\* Capillary viscosity values were obtained using a Canon Ubbelhode Viscometer No. 75 at a concentration of 0.05 or 0.025% active polymer in 1.0 $\underline{N}$ Sodium Chloride.

Examples 12–14

Various monomers were polymerized as in Examples 1–9 using cool white fluorescent lights and the dye indicated. Light intensity was 500 ft. candles (5382 lux).

Example 12

An 85/15 acrylamide/methacryloyloxyethyl trimethylammonium methosulfate (METAMS) copolymer was prepared using:

1167.3 lbs. (529.48 kg) 49.2% acrylamide
253.0 lbs. (114.76 kg) 40% METAMS
78.5 lbs. (35.61 kg) deionized $H_2O$
3.47 gm riboflavin
340.8 gm isopropanol
204.2 gm Versenex 80[R] (Dow)[1]
1250 ml 10% $H_2SO_4$ to pH 4.5

Result: Conversion = 87.2%

$n_{.05}$ = 17.5 dl/g;

[1] Versenex 80, a chelant, is diethylene triamine pentaacetic acid, commercially available from Dow.

Example 13

A 50/50 acrylamide/methacryloyloxyethyl trimethyl ammonium chloride (METAC) copolymer was prepared using:

223.8 lbs. (101.51 kg) 49% acrylamide
154 lbs. (69.85 kg) 71.4% METAC
21.9 lbs. (9.93 kg) deionized $H_2O$
1.34 gm riboflavin
90.8 gm isopropanol
54.5 gm Versenex 80[R] (Dow)[1]
10% $H_2SO_4$ to pH 4.5

Result: Conversion = 98%

$n_{.05}$ = 9.3 dl/g

Example 14

A 75/25 acrylamide/2-acrylamido-2-methylpropane sulfonic acid polymer was prepared using:

178.4 lbs. (80.92 kg) 46.2% Acrylamidomethylpropylsulfonic acid solution
488.3 lbs. (221.49 kg) 49.5% acrylamide
12.9 lbs. (5.85 kg) deionized $H_2O$

7

90.8 gms isopropanol
108.9 gms Versenex 80[R] (Dow)[1.]
1.05 gms riboflavin

Result: $n_{.05}$ = 17.9 dl/g Conversion = 96.1%

[1.] Versenex 80, a chelant, is diethylene triamine pentaacetic acid, commercially available from Dow Chemical.

Examples 11-14 show that various polymers can be prepared using the instant method.

## Claims

1. A continuous polymerization process for preparing water soluble polymers of ethylenically unsaturated water-soluble monomers which comprises:

a. casting upon a continuous belt apparatus to form a film having a thickness of 1/8 inch to 1 inch (0.317 cm to 2.54 cm), an aqueous monomer solution having a monomer concentration of 25 percent to 75 percent, by weight, said monomer solution also containing riboflavin in a concentration of $1 \times 10^{-7}$ to $1 \times 10^{-4}$ moles/liter;

b. passing the solution under a series of fluorescent lights which emit visible light at an intensity of from about 1/10 to less than 1000 foot candles (about 1.08 to less than 10764 lux) and controlling the temperature of the monomer solution in the range of 5°C to 55°C: and

c. allowing polymerization to occur in an atmosphere of air or an inert gaseous substance to form a thick water soluble polymer gel.

2. The process of Claim 1, wherein said monomer is selected from the group consisting of acrylamide, acrylic acid, methacryloyloxyethyl trimethyl ammonium chloride, methacryloyloxyethyl trimethyl ammonium methyl sulfate, methacrylamido-3-propyl trimethyl ammonium chloride, 3-acrylamido-3-methyl butyl trimethyl ammonium chloride, 3-acrylamido-3-methyl propyl trimethyl ammonium chloride, diallyldimethylammonium chloride, or 2-acrylamido-2-methyl propane sulfonic acid, or mixtures thereof, or their water-soluble salts.

3. The process of Claim 1, wherein the temperature of the monomer solution is in the range of 5°C to 45°C.

4. The process of Claim 1, wherein said riboflavin is riboflavin-5'-phosphate.

5. The process of Claim 1, wherein said fluorescent lights are white fluorescent lights.

## Patentansprüche

1. Kontinuierliches Polymerisationsverfahren zur Herstellung wasserlöslicher Polymerer aus ethylenisch ungesättigten wasserlöslichen Monomeren durch

a. Gießen einer wässrigen Monomerlösung mit einer Monomerkonzentration von 25% bis 75%, nach Gewicht, auf eine kontinuierliche Bandvorrichtung unter Bildung einer Folie mit einer Dicke von 1/8 Zoll bis 1 Zoll (0,317 cm bis 2,54 cm), wobei die Monomerlösung weiterhin Riboflavin in einer Konzentration von $1 \times 10^{-7}$ bis $1 \times 10^{-4}$ Mol/Liter enthält;

b. Führen der Lösung unter eine Serie von Fluoreszenzlampen, die sichtbares Licht mit einer Intensität von etwa 1/10 bis weniger als 1000 Footcandle (etwa 1,08 bis weniger als 10764 Lux) ausstrahlen und Einstellen der Temperatur der Monomerlösung im Bereich von 5°C bis 55°C; und

c. Polymerisierenlassen in einer Atmosphäre von Luft oder einer inerten gasförmigen Substanz unter Bildung eines dicken wasserlöslichen Polymergels.

2. Verfahren nach Anspruch 1, worin das Monomer aus der aus Acrylamid, Acrylsäure, Methacryloyloxyethyltrimethylammoniumchlorid, Methacryloyloxyethyltrimethylammoniummethylsulfat, Methacrylamido-3-propyltrimethylammoniumchlorid, 3-Acrylamido-3-methylbutyltrimethylammoniumchlorid, 3-Acrylamido-3-methylpropyltrimethylammoniumchlorid, Diallyldimethylammoniumchlorid, oder 2-Acrylamido-2-methylpropansulfonsäure sowie Mischungen davon oder ihren wasserlöslichen Salzen bestehenden Gruppe ausgewählt wird.

3. Verfahren nach Anspruch 1, worin die Temperatur der Monomerlösung im Bereich von 5°C bis 45°C liegt.

4. Verfahren nach Anspruch 1, worin das Riboflavin Riboflavin-5'-phosphat ist.

5. Verfahren nach Anspruch 1, worin die Fluoreszenzlampen weiße Fluoreszenzlampen sind.

## Revendications

1. Procédé de polymérisation en continu pur préparer des polymères hydrosolubles à partir de monomère hydrosoluble à insaturation éthylénique, qui comprend les étapes de:

a) couler sur un appareil à courroie continue pour former une pellicule ayant une épaisseur comprise entre 0,317 et 2,54 cm (1/8ème à 1 pouce), une solution aqueuse de monomères ayant une concentration en monomères de 25 à 75% en poids, ladite solution de monomères contenant également de la riboflavine en une concentration de $1 \times 10^{-7}$ à $1 \times 10^{-4}$ mole/litre;

b) faire passer la solution sous une série de lampes fluorescentes qui émettent la lumière visible en une intensité comprise entre environ 1,08 à moins de 10764 lux ($1/10_{ème}$ à moins de 1000 foot candles) et régler la température de la solution de monomères à une valeur entre 5 et 55°C; et

c) permettre la polymérisation dans une atmosphère d'air ou d'une substance gazeuse inerte pour former un gel épais de polymère hydrosoluble.

2. Procédé selon la revendication 1, dans lequel ledit monomère est choisi parmi l'acrylamide, l'acide acrylique, le chlorure de méthacryloyloxyéthyltriméthylammonium, le méthylsulfate de méthacryloyloxyéthyltriméthylammonium, le chlorure de méthacrylamido-3-propyltriméthylammonium, le chlorure de 3-acrylamido-3-méthylbutyltriméthylammonium, le chlorure de 3-acrylamido-3-méthylpropyl-triméthyl-ammonium, le chlorure de diallyldiméthylammonium ou l'acide 2-acrylamido-2-méthylpropanesulfonique, leurs mélanges ou leurs sels hydrosolubles.

3. Procédé selon la revendication 1, dans lequel la température de la solution monomère est comprise entre 5 et 45°C.

4. Procédé selon la revenduication 1, dans lequel ladite riboflavine est le 5′-phosphate de riboflavine.

5. Procédé selon la revendication 1, dans lequel les lumières fluorescentes sont des lampes fluorescentes blanches.